# EUROPEAN PATENT SPECIFICATION

(11) **EP 3 969 857 B1**
(45) Date of publication and mention of the grant of the patent: **06.11.2024**
(21) Application number: 20730574.9
(22) Date of filing: 12.05.2020
(51) Int. Cl.: G01G 5/04, G01G 19/02

(54) **WEIGHT MEASURING SYSTEM**
GEWICHTSMESSSYSTEM
SYSTÈME DE MESURE DE POIDS

(30) Priority: 12.05.2019 GB 201906673
(43) Date of publication of application: 23.03.2022
(73) Proprietor: Berg Design Limited, Glencarse Perth, PH2 7NF (GB)
(72) Inventor: RENNIE, Graham William, Scotland PH2 7NF (GB); SHERRIFF, Andrew Sinclair, Scotland ML6 ONR (GB)
(74) Representative: Campbell, Arlene
(86) International application number: PCT/EP2020/063239
(87) International publication number: WO 2020/229497

(56) References cited:
- EP-A2- 0 221 736
- WO-A1-2007/014403
- GB-A- 2 138 579
- US-B2- 8 330 058

## Description

The present invention relates to a weight measuring system, and more particularly to a portable, reusable system for measuring the weight of an object.

It is commonplace for commercial vehicles such as airplanes, ships, trucks and vans that carry various kinds of luggage to be loaded with goods such that the weight of the vehicle, when the goods and passengers are all on board, are above legally allowable levels.

Overloading of vehicle may be deliberate, for example, to reduce shipping costs by transporting a lot of packages at one time; or it may be unintentional, for example a courier collecting parcels over the course of a day.

However, overloading can cause a variety of issues. For example, the motor of an overloaded vehicle may not perform optimally. Alternatively, overloading may cause damage to the vehicle, or the vehicle components, making it liable to cause an accident. For example, damage to an axel or damage to or excessive wear to tyres can cause these components to fail. In addition, a weighty overloaded vehicle will have an increased braking distance and may cause overheating of a brake causing it to be less effective. In addition, excess wear and thus damage to road surfaces may be caused by vehicle over loading.

For vehicles such as airplanes or ships, overloading can cause the vehicle to lose efficiency or become unbalanced which can be dangerous, particularly in stormy or turbulent conditions.

Whilst the effects of overloading are clear, it can be difficult for vehicle operators or passengers to identify visually when a vehicle is overloaded. Thus, for road vehicles, vehicle load measurement is typically performed by driving the loaded vehicle onto a platform balance. However, platform balances are typically large, static pieces of equipment and, therefore, are not of use by road vehicle couriers over the course of their working day as any vehicle weight check would require a detour via a base depot for a weight measurement to be made.

For airplanes or ships, static weighing platforms weight each item being loaded and work on the basis of cumulative load being within tolerance levels if the maximum individual weights are not exceeded.

US8330058, WO2007/014403, GB2138579 and EP0221736 show embodiments of weight measuring systems useful for understanding the invention.

Therefore, it is the object of the present invention to obviate or mitigate one or more of the drawbacks of the existing prior art.

According to a first aspect of the invention there is provided a weight measuring system for weighing a vehicle, as defined in appended claim 1.

By having a sensor unit associated with a deformable fluid filled chamber, the sensor unit is able to determine output data which is changeable relative to the reception of at least one wheel of the vehicle, the processor is able to provide output data which is representative of the weight of at least a portion of the object.

The weighing mechanism may house the sensor unit. The weighing mechanism may house the processor. The sensor unit and processor may be integrated circuitry within the weighing mechanism. A user interface unit may receive data from the processor unit to output to a user. The user interface unit may communicate wirelessly with the processor unit. The user interface may be connected to the processor unit by cables.

The processor may be housed remotely from the weighing mechanism. The processor may be housed in a user interface unit. By providing a user interface unit, the system can provide a user an easy to use interface that provides output data relating to the weight of the object. The sensor unit may be operable to communicate with the processor by cabled connection. The sensor unit may be operable to communicate with the processor by wireless data transfer.

By providing a system having discreet weighing mechanisms and an associated user interface, the size of the system can be minimised thus creating a portable system which an object can be placed on such that weight related data based on sensed data can be quickly determined and provided to the processor.

The sensed criteria may be pressure. By measuring pressure, it will be possible to determine the pressure within the fluid filled chamber when no object is present and the pressure within the fluid filled chamber when the weighing mechanism receives a portion of an object The sensed criteria may be flow rate. By measuring the rate of flow from one area of the chamber to another area of the chamber upon receiving a portion of an object.

The chamber may be defined in a flexible pad. The flexible pad may be provided with a reinforced unit to house the sensor to protect from damage upon receiving a portion of an object. The flexible pad may be operable to deform upon receiving a portion of an object such that no other components are required to actuate a change in criteria within the fluid filled chamber.

The chamber may be defined in a solid housing provided with an actuator which, upon receiving an object, acts upon the chamber to change the measurable criteria.

Each weighing mechanism may provide data which the processor acts upon to provide an output indicative of the weight of the object. The processor may act upon the data to provide a local weight indication directly relevant to the portion of the object received.

The processor may, when more than one weighing mechanism is incorporated within the system, act upon and aggregate the data from each sensor unit to provide an overall weight indication for the object. By having local weight indication output from the processor, relative loading issues can be identified. By having an aggregated total weight data output, the overall weight of the object can be determined to aid in identifying overloading issues.

In an embodiment outside the scope of the present invention, the object may be a consignment for carriage or postage. By have a portable system which can be deployed to weight consignments for carriage, an on the spot determination of weight can be obtained and, if multiple packages are being collected, the weight data for each consignment can be aggregated to provide a cumulative figure of weight of consignments being uploaded.

The object is a vehicle. By providing a system having discreet weighing mechanisms and an associated user interface, the size of the system can be minimised thus creating a portable system which can be carried within a vehicle and used quickly and effectively by setting out the weighing mechanisms in an array which corresponds to a vehicle wheel array, having a vehicle driven onto them and quickly receiving weight related data based on sensed data provided to the processor.

The weighing system may comprise two weighing mechanisms. By providing two weighing mechanisms, vehicles having two or more wheels may be weighed by each weighing mechanism receiving one or more wheels.

The weighing system may comprise four weighing mechanisms. By providing four weighing mechanisms, the weighing mechanisms may be distributed to form an array such that each weighing mechanism corresponds with a wheel of a four wheel vehicle.

According to another aspect of the present invention there is provided a method of determining whether a vehicle is loaded in an imbalanced manner, as defined in appended claim 13.

The present invention will now be described, by way of example only, with reference to the accompanying drawings in which:
Figure 1 shows a side view cross section of weighing mechanism according to an embodiment of the present invention;
Figure 2 shows a plan view cross section of a weighing mechanism according to another embodiment of the present invention;
Figure 3 shows a perspective view of a weight measuring system according to an embodiment of the present invention;
Figure 4 shows a perspective view of weighing system according to another embodiment of the present invention, and
Figure 5 shows a side view of a weighing system not covered by the present invention.

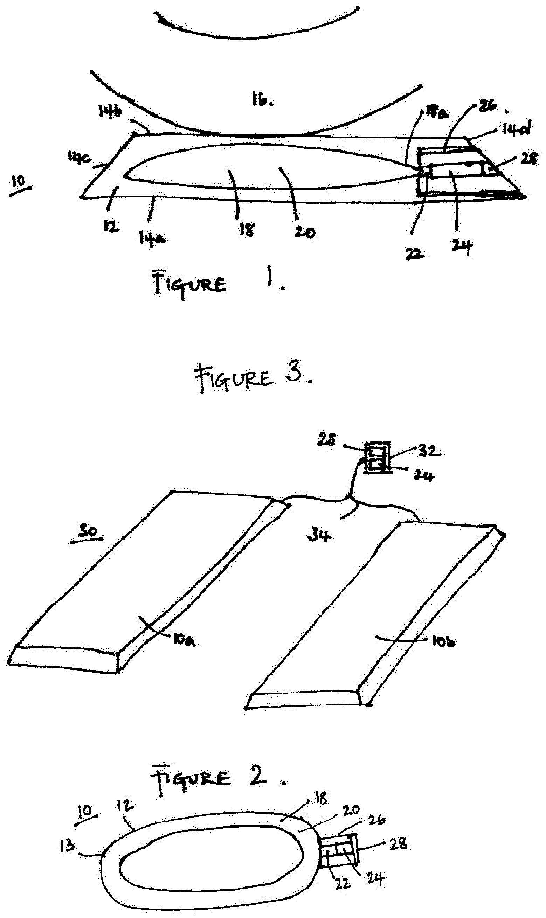

With reference to Figure 1 there is shown a weighing mechanism 10 comprising a pad 12, generally a pad formed of a flexible material such as rubber or similar. The pad 12 has an outer wall 14 with a lower surface 14a for placing the pad on a stable surface such as a floor or the ground and an upper surface 14b suitable for receiving at least one vehicle wheel 16. Side surfacel4c has a sloped surface to enable easy movement of the wheel 16 onto the pad 12. Within pad 12, a chamber 18 is defined as a void which is filled with a fluid 20. The fluid may be any suitable fluid, for example, but not limited to water, hydraulic fluid, oil, or similar. At a first end 18a of chamber 18, there is disposed a sensor unit 22 which, in this case is provided with a pressure sensor. The sensor unit 22 is connected to a processor 24 which is protected by reinforced housing 26. In this embodiment, the processor is then connected to a graphic user interface 28 which is visible through pad wall 14d.

In use, the pad 12 is disposed on a surface, an object 16, in this case a vehicle, is driven such that a wheel is received on pad surface 14d. The weight of the vehicle, experienced through the application of weight from the vehicle through the vehicle wheel 16 caused the fluid 20 in the chamber 18 to become pressurised. The sensor unit 22 is able to determine the level of pressurisation of the fluid 20 and senses this change in criteria and provides the sensed data to processor 24. The processor 24 acts upon the sensed data and is able to output data indicating the sensed weight of the vehicle applied through the wheel 16.

With reference to Figure 2, there is shown another embodiment of a weighing mechanism 10 with like components indicated by the equivalent reference numerals in Figure 1. The weight measurements system 10 comprises a pad 12, which in this embodiment comprises a flexible pipe loop 13 which defines a hollow chamber 18. The chamber 18 is defined as a void which is filled with a fluid 20. The fluid may be any suitable fluid, for example, but not limited to water, hydraulic fluid, oil, or similar. At a first end 18a of chamber 18, there is disposed a sensor unit 22 which, in this case is provided with a pressure sensor. The sensor unit 22 is connected to a processor 24 which is protected by reinforced housing 26. In this embodiment, the processor is then connected to a visible graphic user interface 28.

In use, the pad 12 is disposed on a surface, an object 16, in this case a vehicle, is driven such that a wheel is received onto the flexible pipe loop 13. The weight of the vehicle, experienced through the application of weight from the vehicle through the vehicle wheel 16 caused the fluid 20 in the chamber 18 to become pressurised. The sensor unit 22 is able to determine the level of pressurisation of the fluid 20 and senses this change in criteria and provides the sensed data to processor 24. The processor 24 acts upon the sensed data and is able to output data indicating the sensed weight of the vehicle applied through the wheel 16.

With reference to Figure 3, weighing system 30 is provided with a first elongate weighing mechanism 10a and a second elongate weighing mechanism 10b. It will be appreciated that the weighing mechanisms 10a, 10b may be of the form detailed above with reference to the weighing mechanisms 10 of embodiments of Figure 1 and/or Figure 2 or any other suitable weighing mechanism. In this embodiment, the weighing mechanisms 10a and 10b, are connected to a user interface 32 by cabled connections 34. The elongate weighing mechanisms are each able to simultaneously receive two wheels of a vehicle. In this embodiment, the processor 24 is housed in user interface 32 which is also provided with display 28. As the processor 24 and display 28 are housed in user interface 32, the pads 12a, 12b do not need to include a protective housing 26. In view of this the elongate weighing mechanisms 10a, 10b are suitably flexible that they may be rolled up for ease of storage.

In use, as each elongate weighing mechanism can receive two wheels of a vehicle, data sensed from each pad is able to provide a local weight indication as well being aggregated to provide an overall weight indication. This can be useful in determining whether a vehicle is loaded in an imbalanced manner. For example, if the front wheels of a vehicle are loaded onto the pad 12a and the rear wheels of a vehicle are loaded onto the pad 12b, it can be determined if there is too much weight on the front axle relative to the rear axle, or vice versa as well as giving an indication if the overall weight exceeds legal limits. Similarly, if the right wheels of a vehicle are loaded onto the pad 12a and the left wheels of a vehicle are loaded onto the pad 12b, it can be determined if there is too much weight in the left of the vehicle to the right of the vehicle, or vice versa, as well as giving an indication if the overall weight exceeds legal limits.

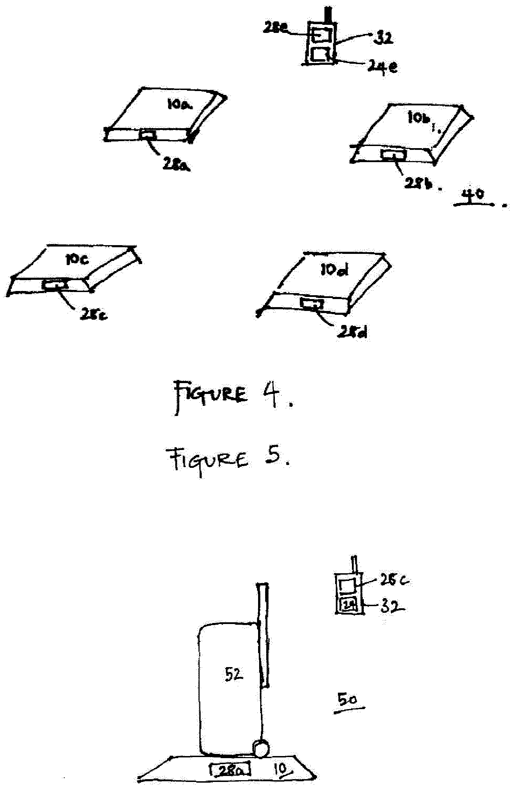

With reference to Figure 4, weighing system 40 is provided with a first weighing mechanism 10a, a second weighing mechanism 10b, a third weighing mechanism 10c and a fourth weighing mechanism 10d. It will be appreciated that the weighing mechanisms 10a, 10b, 10c and 10d may be of the form detailed above with reference to the weighing mechanisms 10 of embodiments of Figure 1 and/or Figure 2 or any other suitable weighing mechanism. In this embodiment, the processors 24 of weighing mechanisms 10a, b, c and d, are connected to a user interface 32 wirelessly. The weighing mechanisms 10a, b, c, d are each able to receive a wheel of a vehicle. In this embodiment, a processor 24 and display 28 is housed in protective housing in each pad 12a, b, c, d. A user interface 32 which is also provided with display 28e and a processor 24e.

In use, as each weighing mechanism 10 can be disposed to form an array which corresponds to the layout of the wheels of a vehicle. Each weighing mechanisms can thus receive a wheel of a vehicle. Data sensed from each pad is able to provide a local weight indication which can be output at display on mechanism 10a, b,c,d respectively. In addition, this data can be provided to user interface 32 and displayed as a pad specific reading as well as being aggregated to provide an overall weight indication. This can be useful in determining whether a vehicle is loaded in an imbalanced manner. For example, if the front right wheel of a vehicle, received by the pad 12a is provided with too much weight relative to the other wheels, this can be identified as an indication of whether the overall weight of the vehicle exceeds legal limits.

With reference to Figure 5, there is shown a weight measuring system 50 for weighing objects, in this case luggage 52, outside the scope of the present invention. The weight measuring system 50 comprises a weighing mechanism 10. It will be appreciated that the weighing mechanisms 10, 10 may be of the form detailed above with reference to the weighing mechanisms 10 of embodiments of Figure 1 and/or Figure 2 or any other suitable weighing mechanism. The luggage can be placed upon the weighing mechanism 10.

In use, the weighing mechanism 10 is disposed on a surface, an object 16, in this case a luggage, is received on the weighing mechanism 10. The weight of the luggage, experienced through the application of force from the luggage 52 causes the fluid 20 in the chamber 18 to become pressurised. The sensor unit 22 is able to determine the level of pressurisation of the fluid 20 and senses this change in criteria and provides the sensed data to processor 24. The processor 24 acts upon the sensed data and is able to output data indicating the sensed weight of the vehicle applied through the wheel 16. This enables, for example, aircraft baggage handlers to receive and on-the-spot determination of the weight of the luggage 52 via hand held user interface 32. Thus the baggage handler can determine whether the luggage is of a suitable weight. Furthermore, the processor 24 of the user interface may be operable to add the cumulative weight of successive pieces of luggage such that an overall weight determination of the luggage being loaded onboard can be obtained. This overall weight value can be used to ensure an aircraft is not overloaded.

It will be appreciated that various improvements and modifications may be made to the embodiment detailed in Figure 5 which are outside the scope of the present invention. Figure 5 illustrates the weighing of a suitcase 52, it will be appreciated that the same arrangement, with allowance for scale, could be used to determine the weight of small object, for example food cans, or could be used to determine the weight of large object, for example shipping containers. It will be further appreciated that although Figure 5 describes an embodiment with reference to an aircraft, the weighing system 50 could similarly be used for consignment or luggage being loaded onto a ship. Furthermore, the vehicle weighing arrangement could be used, for example, in weighing vehicles prior to them boarding a car/passenger ferry or other boat. Similarly, the weigh measuring system and weighing mechanisms could be applied to any use where need of a portable, re-usable weighing system is required.

## Claims

1. A weight measuring system (30,40) for weighing a vehicle, the weight measuring system comprising:
at least two weighing mechanisms (10a,10b,10c,10d), each weighing mechanism comprising a pad (12a,12b,12c,12d) having a deformable fluid filled chamber (18) and an outer wall (14) with a lower surface (14a) for placing the pad on a stable surface and an upper surface (14b) configured
to receive at least one wheel (16) of the vehicle;
a sensor unit (22) operable to determine at least one measurable criteria of the fluid filled chamber and provide output sensor data indicative of the measurable criteria;
a processor (24) operable to act upon the output sensor data and, when the vehicle is received by the system, operable to provide local weight data indicative of the sensed weight of the vehicle applied through the wheel; and
a user interface (32) provided with a display (28), the user interface receiving data from the processor for output to a user;
**characterised in that**:
each weighing mechanism includes a sensor unit; and
the local weight data is aggregated to provide an overall weight indication to determine whether the vehicle is loaded in an imbalanced manner.

2. A weight measuring system as claimed in claim 1 wherein each weighing mechanism includes a processor and the sensor unit and processor are integrated circuitry within each weighing mechanism.

3. A weight measuring system as claimed in claim 2 wherein the user interface communicates wirelessly with the/each processor.

4. A weight measuring system as claimed in claim 2 wherein the user interface is connected to the/each processor by cables.

5. A weight measuring system as claim in claim 1 wherein the processor is housed remotely from the weighing mechanisms.

6. A weight measuring system as claimed in claim 5 wherein each sensor unit is connected to the processor by cabled connection.

7. A weight measuring system as claimed claim 5 wherein the sensor unit is operable to communicate with the processor by wireless data transfer.

8. A weight measuring system as claimed in any preceding claim wherein at least one measurable criteria is pressure or flow rate.

9. A weight measuring system as claimed in any preceding claim wherein the chamber is defined in a solid housing provided with an actuator which, upon receiving a wheel of a vehicle, acts upon the chamber to change the measurable criteria.

10. A weight measuring system as claimed in any preceding claim comprising two elongate weight mechanisms, each elongate weight mechanism being arranged to receive two wheels of a vehicle.

11. A weight measuring system as claimed in any one of claims 1 to 9 comprising a plurality of weighing mechanisms disposed to form an array which corresponds to the layout of the wheels of the vehicle, with each weighing mechanism receiving a wheel of the vehicle.

12. A weight measuring system as claimed in any preceding claim which is a portable system.

13. A method of determining whether a vehicle is loaded in an imbalanced manner, comprising the steps:
(a) providing a weight measurement system (30,40) according to any one of claims 1 to 12;
(b) driving at least one wheel (16) of the vehicle onto each pad;
(c) sensing a change in measurement criteria and providing sensed data to the processor(s) (24);
(d) acting on the sensed data to output local weight data indicative of the sensed weight of the vehicle sensed from each pad;
(e) aggregating the local weight data to provide an overall weight indication;
(f) identifying relative loading issues to determine whether the vehicle is loaded in an imbalanced manner; and
(g) showing data on the display (28) of the user interface.

14. A method of determining whether a vehicle is loaded in an imbalanced manner as claimed in claim 13 wherein at step (b), two wheels of the vehicle are driven onto each pad.

15. A method of determining whether a vehicle is loaded in an imbalanced manner as claimed in claim 13 wherein at step (b) the weighing mechanisms are disposed to form an array which corresponds with the layout of the wheels of the vehicle and each pad receives a wheel of the vehicle.

## Patentansprüche

1. Gewichtsmesssystem (30,40) zum Wiegen eines Fahrzeugs, wobei das Gewichtsmesssystem Folgendes umfasst:
mindestens zwei Wiegemechanismen (10a,10b,10c,10d), wobei jeder Wiegemechanismus eine Matte (12a, 12b, 12c, 12d), die eine mit verformbarem Fluid gefüllte Kammer (18) und eine Außenwand (14) aufweist, mit einer unteren Oberfläche (14a) zum Platzieren der Matte auf einer stabilen Oberfläche und einer oberen Oberfläche (14b) umfasst, die zum Aufnehmen mindestens eines Rads (16) des Fahrzeugs konfiguriert ist;
eine Sensoreinheit (22), die dazu betreibbar ist, mindestens ein messbares Kriterium der mit Fluid gefüllten Kammer zu bestimmen und Ausgabesensordaten bereitzustellen, die die messbaren Kriterien angeben;
einen Prozessor (24), der betreibbar ist, um auf die Ausgabesensordaten einzuwirken, und, wenn das Fahrzeug durch das System aufgenommen ist, betreibbar ist, um lokale Gewichtsdaten bereitzustellen, die das erfasste Gewicht des Fahrzeugs angeben, das über das Rad aufgebracht wird; und
eine Benutzerschnittstelle (32), die mit einer Anzeige (28) versehen ist, wobei die Benutzerschnittstelle Daten von dem Prozessor zur Ausgabe an einen Benutzer empfängt;
**dadurch gekennzeichnet, dass**:
jeder Wiegemechanismus eine Sensoreinheit enthält; und
die lokalen Gewichtsdaten aggregiert werden, um eine Gesamtgewichtsangabe bereitzustellen, um zu bestimmen, ob das Fahrzeug ungleichmäßig beladen ist.

2. Gewichtsmesssystem nach Anspruch 1, wobei jeder Wiegemechanismus einen Prozessor enthält und die Sensoreinheit und der Prozessor integrierte Schaltkreise innerhalb jedes Wiegemechanismus sind.

3. Gewichtsmesssystem nach Anspruch 2, wobei die Benutzerschnittstelle drahtlos mit dem/jedem Prozessor kommuniziert.

4. Gewichtsmesssystem nach Anspruch 2, wobei die Benutzerschnittstelle durch Kabel mit dem/jedem Prozessor verbunden ist.

5. Gewichtsmesssystem nach Anspruch 1, wobei der Prozessor entfernt von den Wiegemechanismen untergebracht ist.

6. Gewichtsmesssystem nach Anspruch 5, wobei jede Sensoreinheit durch eine Kabelverbindung mit dem Prozessor verbunden ist.

7. Gewichtsmesssystem nach Anspruch 5, wobei die Sensoreinheit betreibbar ist, um mit dem Prozessor durch drahtlose Datenübertragung zu kommunizieren.

8. Gewichtsmesssystem nach einem vorhergehenden Anspruch, wobei mindestens ein messbares Kriterium Druck oder Strömungsrate ist.

9. Gewichtsmesssystem nach einem vorhergehenden Anspruch, wobei die Kammer in einem festen Gehäuse definiert ist, das mit einem Aktuator versehen ist, der bei Aufnahme eines Rads eines Fahrzeugs auf die Kammer einwirkt, um die messbaren Kriterien zu ändern.

10. Gewichtsmesssystem nach einem vorhergehenden Anspruch, zwei längliche Gewichtsmechanismen umfassend, wobei jeder längliche Gewichtsmechanismus so angeordnet ist, dass er zwei Räder eines Fahrzeugs aufnimmt.

11. Gewichtsmesssystem nach einem der Ansprüche 1 bis 9, eine Vielzahl von Wiegemechanismen umfassend, die so positioniert sind, dass sie eine Aufstellung bilden, die der Anordnung der Räder des Fahrzeugs entspricht, wobei jeder Wiegemechanismus ein Rad des Fahrzeugs aufnimmt.

12. Gewichtsmesssystem nach einem vorhergehenden Anspruch, das ein tragbares System ist.

13. Verfahren zum Bestimmen, ob ein Fahrzeug ungleichmäßig beladen ist, umfassend die folgenden Schritte:
(a) Bereitstellen eines Gewichtsmesssystems (30,40) nach einem der Ansprüche 1 bis 12;
(b) Auffahren von mindestens einem Rad (16) des Fahrzeugs auf jede Matte;
(c) Erfassen einer Änderung der Messkriterien und Bereitstellen der erfassten Daten an den/die Prozessor(en) (24);
(d) Einwirken auf die erfassten Daten, um lokale Gewichtsdaten auszugeben, die das von jeder Matte erfasste Gewicht des Fahrzeugs angeben;
(e) Aggregieren der lokalen Gewichtsdaten, um eine Gesamtgewichtsangabe bereitzustellen,
(f) Identifizieren relativer Beladungsprobleme, um zu bestimmen, ob das Fahrzeug ungleichmäßig beladen ist; und
(g) Darstellen von Daten auf der Anzeige (28) der Benutzerschnittstelle.

14. Verfahren zum Bestimmen, ob ein Fahrzeug ungleichmäßig beladen ist, nach Anspruch 13, wobei in Schritt (b) zwei Räder des Fahrzeugs auf jede Matte gefahren werden.

15. Verfahren zum Bestimmen, ob ein Fahrzeug ungleichmäßig beladen ist, nach Anspruch 13, wobei in Schritt (b) die Wiegemechanismen so positioniert werden, dass sie eine Aufstellung bilden, die der Anordnung der Räder des Fahrzeugs entspricht, und jede Matte ein Rad des Fahrzeugs aufnimmt.

## Revendications

1. Système de mesure de poids (30, 40) destiné au pesage d'un véhicule, le système de mesure de poids comprenant :
au moins deux mécanismes de pesée (10a, 10b, 10c, 10d), chaque mécanisme de pesée
comprenant une base (12a, 12b, 12c, 12d) comportant une chambre déformable remplie de fluide (18) et une paroi externe (14) avec une surface inférieure (14a) pour placer la base sur une surface stable et une surface supérieure (14b) conçue pour recevoir au moins une roue (16) du véhicule ;
une unité de capteur (22) servant à déterminer au moins un critère mesurable de la chambre remplie de fluide et à fournir des données de capteur de sortie indiquant les critères mesurables ;
un processeur (24) servant à agir sur les données du capteur de sortie et, lorsque le véhicule est reçu par le système, servant à fournir des données de poids locales indiquant le poids détecté du véhicule appliqué par l'intermédiaire de la roue ; et
une interface utilisateur (32) dotée d'un dispositif d'affichage (28), l'interface utilisateur recevant des données en provenance du processeur pour une émission en sortie vers un utilisateur ;
**caractérisé en ce que** :
chaque mécanisme de pesage comprend une unité de capteur ; et
les données de poids locales sont agrégées pour fournir une indication de poids globale afin de déterminer si le véhicule est chargé de manière déséquilibrée.

2. Système de mesure de poids selon la revendication 1, chaque mécanisme de pesée comprenant un processeur et ladite unité de capteur et ledit processeur étant des circuits intégrés dans chaque mécanisme de pesée.

3. Système de mesure de poids selon la revendication 2, ladite interface utilisateur communiquant sans fil avec le/chaque processeur.

4. Système de mesure de poids selon la revendication 2, ladite interface utilisateur étant connectée au/à chaque processeur par des câbles.

5. Système de mesure de poids selon la revendication 1, ledit processeur étant logé à distance des mécanismes de pesée.

6. Système de mesure de poids selon la revendication 5, chaque unité de capteur étant connectée au processeur par une connexion câblée.

7. Système de mesure de poids selon la revendication 5, ladite unité de capteur servant à communiquer avec le processeur par transfert de données sans fil.

8. Système de mesure de poids selon une quelconque revendication précédente, au moins un critère mesurable étant la pression ou le débit.

9. Système de mesure de poids selon une quelconque revendication précédente, ladite chambre étant définie dans un boîtier solide doté d'un actionneur qui, lors de la réception d'une roue d'un véhicule, agit sur la chambre pour modifier les critères mesurables.

10. Système de mesure de poids selon une quelconque revendication précédente, comprenant deux mécanismes de poids allongés, chaque mécanisme de poids allongé étant agencé pour recevoir deux roues d'un véhicule.

11. Système de mesure de poids selon l'une quelconque des revendications 1 à 9, comprenant une pluralité de mécanismes de pesée disposés pour former un réseau qui correspond à la disposition des roues du véhicule, chaque mécanisme de pesée recevant une roue du véhicule.

12. Système de mesure de poids selon une quelconque revendication précédente, qui est un système portable.

13. Procédé de détermination pour savoir si un véhicule est chargé de manière déséquilibrée, comprenant les étapes de :
(a) fourniture d'un système de mesure de poids (30, 40) selon l'une quelconque des revendications 1 à 12 ;
(b) entraînement d'au moins une roue (16) du véhicule sur chaque base ;
(c) détection d'un changement dans les critères de mesure et fourniture des données détectées à le ou les processeurs (24) ;
(d) action sur les données détectées pour émettre en sortie des données de poids locales indiquant le poids détecté du véhicule détecté à partir de chaque base ;
(e) agrégation des données de poids locales pour fournir une indication de poids globale ;
(f) identification des problèmes de chargement relatifs pour déterminer si le véhicule est chargé de manière déséquilibrée ; et
(g) présentation de données sur le dispositif d'affichage (28) de l'interface utilisateur.

14. Procédé de détermination pour savoir si un véhicule est chargé de manière déséquilibrée selon la revendication 13, à l'étape (b), deux roues du véhicule étant entraînées sur chaque base.

15. Procédé de détermination pour savoir si un véhicule est chargé de manière déséquilibrée selon la revendication 13, à l'étape (b), lesdits mécanismes de pesée étant disposés pour former un réseau qui correspond à la disposition des roues du véhicule et chaque base recevant une roue du véhicule.
